# EUROPEAN PATENT SPECIFICATION

(11) **EP 2 107 324 B1**
(45) Date of publication and mention of the grant of the patent: **05.04.2017**
(21) Application number: 09156189.4
(22) Date of filing: 25.03.2009
(51) Int. Cl.: F25D 23/00

(54) **Air treatment unit, particularly for conditioning, refrigeration, and the like**
Luftbehandlungseinheit, insbesondere zur Aufbereitung, Kühlung und dergleichen
Unité de traitement d'air, en particulier pour la climatisation, la réfrigération et similaires

(30) Priority: 03.04.2008 IT BO20080207
(43) Date of publication of application: 07.10.2009
(73) Proprietor: Clima Motive S.r.l., 61019 Sant'Agata Feltria PU (IT)
(72) Inventor: Faccio, Lorenzo, 10020, Andezeno TO (IT); Moffa, Giorgio, 12050, Magliano Alfieri CN (IT)
(74) Representative: Modiano, Micaela Nadia

(56) References cited:
- CA-A1- 2 541 678
- US-A- 3 274 841
- US-A- 3 922 927
- US-A- 4 452 418
- US-A- 4 512 752
- US-A1- 2004 057 845

## Description

The present invention relates to an air treatment unit, particularly for conditioning, refrigeration, and the like.

Air treatment units are known which can be installed for example on motor vehicles, such as trucks, caravans, or also boats, fixed cabins, and the like, and allow to control and adjust the temperature inside the respective cabins and rooms. These air treatment units, particularly air refrigeration or conditioning units, commonly comprise compressors of the hermetically sealed or also of the semi-hermetically sealed type, which are preferred over other types of refrigeration compressor, since among other things they do not require maintenance and are free from leaks of refrigerating fluid and from possible losses of lubricant. In fact, particularly in hermetically sealed compressors, the components suitable for compression of the gas and the electric driving motor are accommodated within a single enclosure that cannot be opened or inspected with nondestructive methods.

However, it is known that these types of compressor have to be kept in a predefined angular position to ensure their correct operation, with a very limited angular positioning tolerance.

The mounting of the hermetically or semi-hermetically sealed compressor in an incorrect angular position in fact can entail damage thereto due to lack of lubrication of the internal mechanical elements, and problems to other internal components due to an unbalanced distribution of the masses on the respective supports.

For this reason, the compressor is necessarily installed in receptacles that define a unique angular position thereof according to specific requirements of the application. For example, if this receptacle is provided for installation of the unit on a horizontal plane, mounting on an inclined plane will not be possible, because the compressor might be damaged, compromising the operation of the entire unit.

It is therefore evident that air treatment units of the known type have drawbacks, because at least the compressor of a same unit cannot be installed on planes that have a different inclination.

Document US4452418 teaches a mounting mechanism for a car cooler rotary compressor with a pulley mounted on the driving shaft about which a V-belt is wound, the V-belt also being wound around an engine pulley. The compressor may be adjustably rotated around bolts to move the compressor towards or away from the engine centering so that the tension of the V-belt is adjusted.

The aim of the present invention is to solve the above-mentioned drawbacks by providing an air treatment unit, particularly for conditioning, refrigeration and the like, that allows to adjust the angular position of the compressor independently of the mounting position of such unit.

Within this aim, an object of the present invention is to provide a unit which, by way of its particular constructive characteristics, is capable of giving the greatest assurances of reliability and safety in use.

Another object of the present invention is to provide a unit that is simple, relatively easy to provide in practice, safe in use, effective in operation, and competitive from an economic standpoint.

This aim and these and other objects, which will become better apparent hereinafter, are achieved by an air treatment unit according to claim 1.

Further characteristics and advantages of the invention will become better apparent from the following detailed description of a preferred but not exclusive embodiment of an air treatment unit, particularly for conditioning, refrigeration and the like, according to the invention, illustrated by way of non-limiting example in the accompanying drawings, wherein:
Figure 1 is a schematic perspective view of a compressor of an air treatment unit according to the invention associated with selective articulation means;
Figure 2 is a schematic side view of a unit according to the invention installed on a horizontal roof of a truck camper;
Figure 3 is a schematic side view of the unit according to the invention installed on an inclined roof of the cab of a truck.

With reference to the figures, the reference numeral 1 generally designates an air treatment unit, particularly for conditioning, refrigeration and the like, according to the invention.

The air treatment unit 1 comprises at least one mounting base 2, at least one portion 2a of which comprises selective articulation means 3 for the fixing of a respective compressor 4 according to a plurality of configurations with different angular arrangement of the compressor 4, so as to ensure its positioning in a correct operating condition regardless of the inclination of the portion 2a.

The refrigerating compressor 4 is of the hermetically sealed or even semi-hermetically sealed type.

The selective articulation means 3 comprise a bracket 5 for supporting the compressor 4, which is pivoted so that it can rotate selectively to at least one wing 6 that is associated jointly with the portion 2a. In greater detail, the bracket 5 forms two lateral lugs 5a, which are pivoted in an upper region to two respective wings 6, which are jointly associated with the portion 2a.

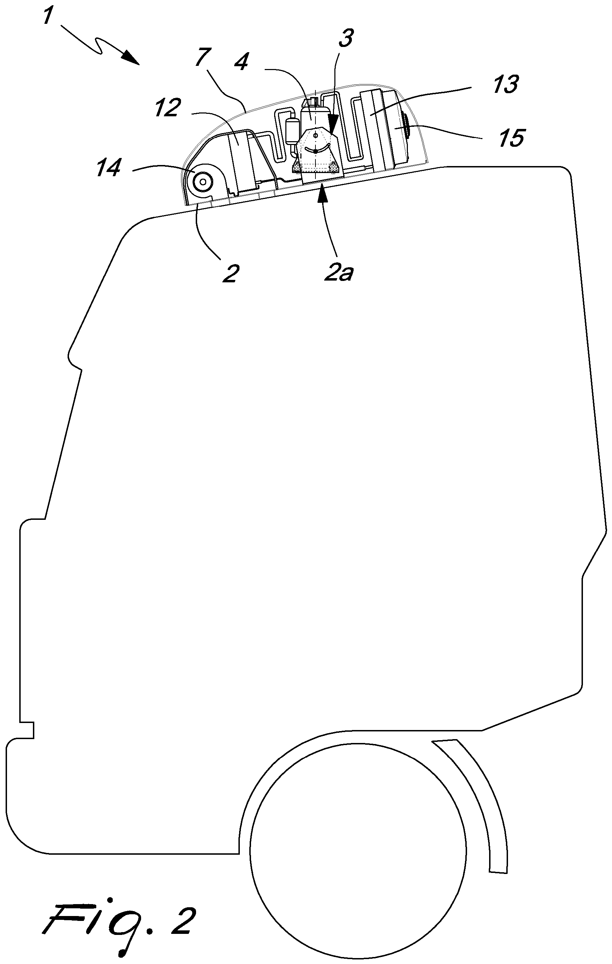

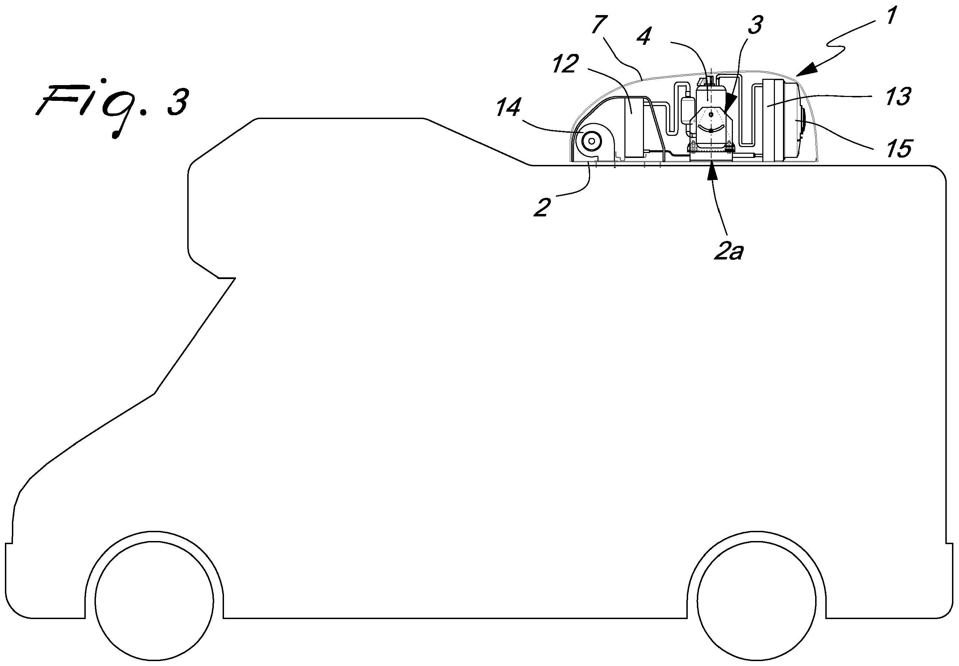

The unit 1 comprises an outer containment enclosure 7, which is associated with the base 2, and the portion 2a can be contained within the enclosure 7 (as shown in Figures 2 and 3) or can also be located outside the enclosure 7, depending on the specific requirements.

Conveniently, the selective articulation means 3 comprise two locking elements 8 of the bolt type: each locking element 8 comprises a screw 8a, which engages a corresponding curved slot 9 provided on a respective wing 6, and a respective hole 10, which is provided on the corresponding lug 5a of the bracket 5 and the threaded end of which can engage a respective locking nut 8b. The locking elements 8 of the bolt type allow to fasten the bracket 5 to the wings 6 in an angular configuration that corresponds to the condition of correct operation of the compressor 4.

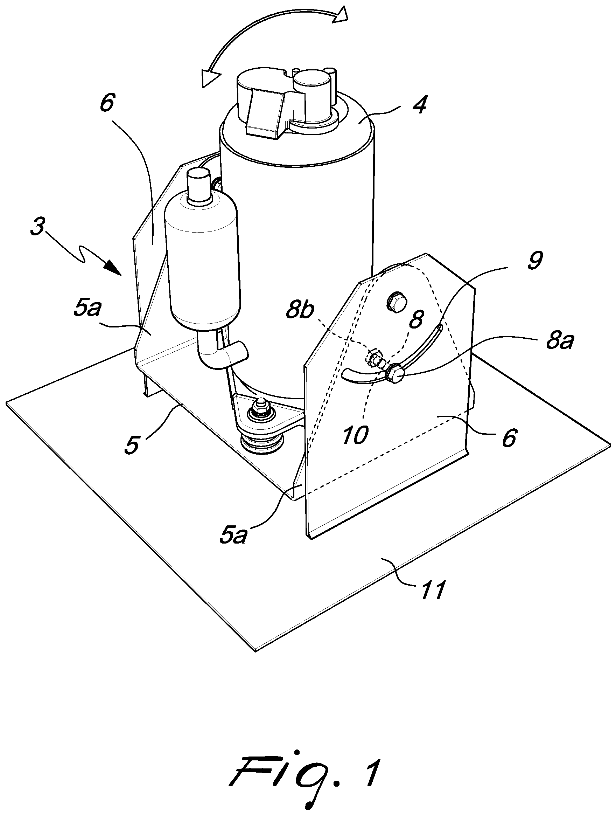

As shown in Figure 1, the wings 6 are jointly associated with a fixing plate 11 that is jointly connected to the portion 2a.

As shown in Figures 2 and 3, the compressor 4 and the respective selective articulation means 3 can be contained within the containment enclosure 7 of the unit 1 that is associated with the base 2, the enclosure 7 further containing the other components of the unit, including an evaporator 12, a condenser 13, and respective fans 14 and 15.

In particular, in Figure 2 the unit 1 is installed on a horizontal roof of a truck camper, whereas in Figure 3 the unit is installed on an inclined roof of the cab of a truck: in both cases, the selective articulation means 3 allow advantageously to position angularly the compressor 4 in a correct operating condition, regardless of the different mounting inclination (respectively substantially horizontal and inclined) of the portion 2a that comprises such selective articulation means.

It is in fact sufficient to turn the bracket 5, which supports the compressor 4, through the angle that is necessary to move it into the correct operating condition, and then lock it to the wings 6, acting on the locking elements 8 that allow to fasten the lugs 5a of the bracket 5 to the wings 6.

It should be noted that the articulation means 3 allow the suitable angular positioning of the compressor 4 in any predefined condition of correct operation, be it with a substantially vertical axis (as shown in Figure 2 and in Figure 3) or even an inclined axis, according to the respective manufacturing and operating specifications.

The adapted angular positioning of the compressor 4 is provided in the same manner by way of the articulation means 3 also in embodiments (not shown in the figures) that provide for the placement of the compressor 4 outside the enclosure 7.

The unit 1 may further comprise a plurality of compressors 4 and corresponding brackets 5 and wings 6 of the selective articulation means 3 in a number that is necessary for the correct angular positioning of the compressors 4.

The unit 1 can be installed on motor vehicles such as truck campers, trucks, cars and trailers, or also on boats, or mobile offices, fixed cabins, and others; the respective compressors 4 can be supplied with power for example by the battery of the vehicle or by an electric generator or directly by the electrical mains.

In practice it has been found that the invention achieves the intended aim and objects, since the described air treatment unit 1 allows to adapt the angular position of the compressor 4 with respect to any mounting position of the portion 2a, so as to ensure its positioning in a correct operating condition.

The invention thus conceived is susceptible of numerous modifications and variations, all of which are within the scope of the appended claims; thus, in another possible alternative embodiment (not shown in the figures) of the air treatment unit 1, the selective articulation means 3 can comprise at least one arm that is jointly associated with the compressor and is supported so that it can rotate by an element for connection to such portion.

All the details may further be replaced with other technically equivalent ones.

In the exemplary embodiments shown, individual characteristics, given in relation to specific examples, may actually be interchanged with other different characteristics that exist in other exemplary embodiments.

In practice, the materials used, as well as the shapes and dimensions, may be any according to requirements and to the state of the art without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An air treatment unit (1), particularly for conditioning, refrigeration and the like, wherein it comprises at least one mounting base
(2), at least one portion (2a) of said base (2) comprising selective articulation means (3) for the fixing of a respective hermetically or semi-hermetically sealed type compressor (4) according to a plurality of configurations with a different angular arrangement of said compressor (4), so as to ensure its positioning in a correct operating condition regardless of the inclination of said portion (2a), said selective articulation means (3) comprising a bracket (5) that supports said compressor (4), said bracket (5) being pivoted so that it can rotate selectively to at least one wing (6) that is jointly associated with said portion (2a), said bracket (5) forming two lateral lugs (5a), which are pivoted in an upper region to two respective wings (6) that are jointly associated with said portion (2a), said bracket (5) that supports said compressor (4) being pivotably rotatable to said at least one wing (6) to select the angular position of the axis of said compressor (4) with respect to said portion (2a) of said mounting base (2), said selective articulation means (3) comprising at least one locking element (8), which engages at least one corresponding curved slot (9) provided on at least one wing (6) and can engage in at least one respective hole (10) that is provided on at least one lug (5a) of said bracket (5), so as to fasten said bracket (5) to said at least one wing (6) in an angular configuration that corresponds to the condition of correct operation of said compressor (4).

2. The unit according to claim 1, **characterized in that** it comprises an outer containment enclosure (7) that is associated with said base (2), said portion (2a) being contained within said enclosure (7).

3. The unit according to claim 1, **characterized in that** it comprises an outer containment enclosure (7) that is associated with said base (2), said portion (2a) being located outside said enclosure (7).

4. The unit according to one or more of the preceding claims, **characterized in that** said wings (6) are jointly associated with a fixing plate (11) that is jointly connected to said portion (2a).

5. The unit according to claim 1, **characterized in that** said at least one locking element (8) is of the bolt type comprising a screw (8a) that affects said corresponding curved slot (9) of said wing (6) and said respective hole (10) of said lug (5a), and the threaded end of which can engage a respective fastening nut (8b).

6. The unit according to one or more of the preceding claims, **characterized in that** said selective articulation means (3) comprise at least one arm which is jointly associated with said compressor (4) and is supported so that it can rotate by an element for connection to at least said portion (2a).

## Patentansprüche

1. Luftbehandlungseinheit (1), insbesondere zur Aufbereitung, Kühlung und dergleichen, die mindestens eine Grundplatte (2) umfasst, wobei mindestens ein Teil (2a) der Platte (2) selektive Gelenkverbindungsmittel (3) für die Befestigung eines entsprechenden Kompressors (4) vom hermetisch oder halbhermetisch abgedichteten Typ in einer Vielzahl von Anordnungen mit verschiedener Winkelanordnung des Kompressors (4) umfasst, um seine Positionierung in einem korrekten Betriebszustand unabhängig von der Neigung des Teils (2a) sicherzustellen, wobei die selektiven Gelenkverbindungsmittel (3) eine Stütze (5) umfassen, die den Kompressor (4) trägt, wobei die Stütze (5) selektiv drehbar gelenkig mit mindestens einer Seitenplatte (6) verbunden ist, welche fest mit dem Teil (2a) verbunden ist, wobei die Stütze (5) zwei seitliche Ansätze (5a) bildet, die in einem oberen Bereich gelenkig mit zwei entsprechenden Seitenplatten (6) verbunden sind, welche fest mit dem Teil (2a) verbunden sind, wobei die Stütze (5), die den Kompressor (4) trägt, gelenkig drehbar mit der mindestens einen Seitenplatte (6) verbunden ist, um die Winkelposition der Achse des Kompressors (4) mit Bezug auf den Teil (2a) der Grundplatte (2) zu wählen, wobei die selektiven Gelenkverbindungsmittel (3) mindestens ein Sperrelement (8) umfassen, welches in mindestens einen entsprechenden Kurvenschlitz (9) eingreift, der in mindestens einer Seitenplatte (6) angebracht ist und in mindestens eine entsprechende Bohrung (10) eingreifen kann, die in mindestens einem Ansatz (5a) der Stütze (5) angebracht ist, um die Stütze (5) an der mindestens einen Seitenplatte (6) in einer Winkelanordnung zu befestigen, die dem Zustand korrekten Betriebs des Kompressors (4) entspricht.

2. Einheit gemäß Anspruch 1, **dadurch gekennzeichnet, dass** sie ein äußeres Einschlussgehäuse (7) umfasst, das mit der Platte (2) verbunden ist, wobei der Teil (2a) in dem Gehäuse (7) untergebracht ist.

3. Einheit gemäß Anspruch 1, **dadurch gekennzeichnet, dass** sie ein äußeres Einschlussgehäuse (7) umfasst, das mit der Platte (2) verbunden ist, wobei der Teil (2a) sich außerhalb des Gehäuses (7) befindet.

4. Die Einheit gemäß einem oder mehreren der obigen Ansprüche, **dadurch gekennzeichnet, dass** die Seitenplatten (6) fest mit einer Befestigungsplatte (11) verbunden sind, die fest mit dem Teil (2a) verbunden ist.

5. Einheit gemäß Anspruch 1, **dadurch gekennzeichnet, dass** das mindestens eine Sperrelement (8) vom Bolzentyp ist und eine Schraube (8a) umfasst, die den entsprechenden Kurvenschlitz (9) der Seitenplatte (6) und die entsprechende Bohrung (10) des Ansatzes (5a) betrifft und deren Gewindeende in eine entsprechende Befestigungsmutter (8b) eingreifen kann.

6. Einheit gemäß einem oder mehreren der obigen Ansprüche, **dadurch gekennzeichnet, dass** die selektiven Gelenkverbindungsmittel (3) mindestens einen Arm umfassen, der fest mit dem Kompressor (4) verbunden und drehbar an einem Element zur Verbindung mit mindestens dem Teil (2a) gelagert ist.

## Revendications

1. Unité de traitement d'air (1), en particulier pour la climatisation, la réfrigération, et analogue, dans laquelle elle comprend au moins une base de montage (2), au moins une partie (2a) de ladite base (2) comprenant des moyens d'articulation sélective (3) pour la fixation d'un compresseur du type scellé hermétiquement ou semi-hermétiquement respectif (4) selon une pluralité de configurations avec un agencement angulaire différent dudit compresseur (4), de façon à assurer son positionnement dans une condition de fonctionnement correcte quelle que soit l'inclinaison de ladite partie (2a), lesdits moyens d'articulation sélective (3) comprenant un étrier (5) qui supporte ledit compresseur (4), ledit étrier (5) pivotant de telle sorte qu'il puisse tourner de façons sélective vers au moins une aile (6) qui est associée conjointement à ladite partie (2a), ledit étrier (5) formant deux pattes latérales (5a), qui pivotent dans une région supérieure vers deux ailes respectives (6) qui sont associées conjointement à ladite partie (2a), ledit étrier (5) qui supporte ledit compresseur (4) pouvant tourner de façon pivotante par rapport à ladite aile au nombre d'au moins une (6) de façon à sélectionner la position angulaire de l'axe dudit compresseur (4) par rapport à ladite partie (2a) de ladite base de montage (2), lesdits moyens d'articulation sélective (3) comprenant au moins un élément de verrouillage (8), qui vient en prise avec au moins une fente incurvée correspondante (9) située sur au moins une aile (6) et qui peut venir en prise dans au moins un trou respectif (10) qui est situé sur au moins une patte (5a) dudit étrier (5), de façon à fixer ledit étrier (5) à ladite aile au nombre d'au moins une (6) selon une orientation angulaire qui correspond à la condition de fonctionnement correct dudit compresseur (4).

2. Unité selon la revendication 1, **caractérisée en ce qu'**elle comprend une enceinte de confinement extérieure (7) qui est associée à ladite base (2), ladite partie (2a) étant contenue à l'intérieur de ladite enceinte (7).

3. Unité selon la revendication 1, **caractérisée en ce qu'**elle comprend une enceinte de confinement extérieure (7) qui est associée à la base (2), ladite partie (2a) étant disposée à l'extérieur de ladite enceinte (7).

4. Unité selon l'un ou plusieurs des revendications précédentes, **caractérisée en ce que** lesdites ailes (6) sont associées conjointement à une plaque de fixation (11) qui est reliée conjointement à ladite partie (2a).

5. Unité selon la revendication 1, **caractérisée en ce que** ledit élément de verrouillage au nombre d'au moins un (8) est du type boulon comprenant une vis (8a) qui affecte ladite fente incurvée correspondante (9) de ladite aile (6) et ledit trou respectif (10) de ladite patte (5a), et dont l'extrémité filetée peut venir en prise avec un écrou de fixation respectif (8b).

6. Unité selon l'une ou plusieurs des revendications précédentes, **caractérisée en ce que** lesdits moyens d'articulation sélective (3) comprennent au moins un bras qui est associé conjointement audit compresseur (4) et qui est supporté de telle sorte qu'il puisse tourner par un élément pour une liaison avec au moins ladite partie (2a).
